# EUROPEAN PATENT APPLICATION

(11) **EP 2 720 409 A1**
(43) Date of publication of application: **16.04.2014**
(21) Application number: 12290335.4
(22) Date of filing: 09.10.2012
(51) Int. Cl.: H04L 12/28, H04L 12/26, H04L 12/24

(54) **Device and method for home network analysis**

(71) Applicant: Alcatel Lucent, 75007 Paris (FR)
(72) Inventor: Gacanin, Haris, 2600 Antwerpen (BE)
(74) Representative: IP Hills NV

(57) **Abstract**

The invention concerns a home network analyser (10) for a home network (1) comprising a plurality of communication layers (20, 22, 24, 26), said home network analyser (10) comprising a collection module (30) configured to receive physical communication layer performance parameters (41, 42, 43) indicative for the performance of a physical communication layer (20) of said home network (1). According to the invention said collection module (30) being further configured to receive at least one other performance parameter (44, 45, 46, 47, 48, 49), indicative for the performance of at least one other communication layer (22, 24, 26).

## Description

### Field of the Invention

The present invention generally relates to the field of devices and methods for improving the performance analysis of home network infrastructure.

### Background of the Invention

Residential internet connectivity traditionally consists of single voice-band modem, a Digital Subscriber Line or DSL modem, or a coax-cable modem, connected to a computer in the house. With the arrival of new applications and technologies, such as digital television, on-line gaming and home automation, the Internet access needs to be extended to various types of home devices, such as a set-top box, a game console, a home automation system, plural desktops or laptops, etc. All those home devices are then typically interconnected by means of a home network, which need to be set up and configured. A home network typically accesses the Internet via a home network gateway or residential gateway, which is connected to an access network via a traditional DSL modem or coax-cable modem. The interconnectivity between two devices in the home network itself is based on, typically already existing, in-house media such as twisted pair phone wires, electrical power wires, coax-cables and/or wireless technologies like WiFi.

Most of the time, the in-house available media typically suffers from a low quality physical layer offering poor immunity for interference in-house. Twisted pair phone wires are usually slightly twisted. Electrical power wires typically consist of low category cable that is not twisted at all. As a result, these existing media are usually sensitive to various kinds of noise. Further also the usable spectrum of such a home network is limited by the characteristics of the medium and structure of the network.

The communication links between two home network devices may be impacted by plurality of potential disturbers to such an extent that the usable signal-to-noise ratio (SNR) between the two home network devices is drastically reduced, sometimes to such that the intended service cannot be provided. When such performance issues arise in such a home network, analysis and troubleshooting is left to the end user, often without assistance. When advice is provided by a telecommunication operator helpdesk, the analysis of the problem reaches beyond the access network and in most cases triggers the dispatch of the telecommunication operator technicians to investigate the performance problems in the customer premises. This is time consuming and inefficient and even then diagnostic and troubleshooting solution available deal with detection of particular problems at a specific Open Systems Interconnection (OSI) layer of the telecommunication setup. For example noise behaviour is analysed at the level of the physical

Most of these solutions are dealing with problems with parameters related to parameters such as for example noise behaviour which is related to the performance of a physical communication layer (PHY) or OSI layer 1, device discovery via MAC address tables which is related to performance of a media access control communication layer (MAC) or OSI layer 2, IP address discovery via ping which is related to performance of a network communication layer (NET) or OSI layer 3, an application error report received by the end user which is related to the performance of an application communication layer (APP) or OSI layer 7.

Although there are available troubleshooting applications related to the physical communication layer (PHY) and for the other communication layers of a home network individually, it remains difficult to determine reliably from each of these individual network performance parameters the physical level disturbers such as for example dimmers, radio frequency interference, etc.

Therefore there exists a need for an improved method and system for analysing a home network that is able to cope with performance problems more reliably.

### Summary of the Invention

According to a first aspect of the invention there is provided a home network analyser for a home network comprising a plurality of communication layers, said home network analyser comprising a collection module configured to receive physical communication layer performance parameters indicative for the performance of a physical communication layer of said home network,
CHARACTERIZED IN THAT,
said collection module being further configured to receive at least one other performance parameter, indicative for the performance of at least one other communication layer.

In this way it becomes possible to analyse home network physical layer problems more efficiently and with a higher quality as the information about the other layers is able to increase the reliability of a correct and complete analysis of physical layer parameters.

According to an embodiment said collection module adjusts at least one of said physical communication layer performance parameters in function of at least one of said other performance parameters.

This automates and simplifies corrective action on the physical layer parameters during analysis.

According to a further embodiment said at least one other communication layer, comprises one or more of the following:
- a media access control communication layer;
- a network communication layer; and/or
- an application communication layer.

According to still a further embodiment said physical communication layer performance parameter comprises one or more of the following:
- Channel frequency response, for example as an average attenuation value or a frequency-dependent vector;
- Signal-to-noise ratio, for example as an average attenuation value or a frequency-dependent vector;
- Noise level, for example as an average attenuation value or a frequency-dependent vector;
- Code rate; and/or
- Modulation type, and
   said at least one other performance parameter comprises one or more of the following:
   - for said media access control communication layer:
      - Scheduling;
      - Throughput;
      - Bit error rate;
      - Cyclic Redundancy Check; and/or
      - retransmission counters; and/or
      - a list of devices,
   - for said network communication layer:
      - IP tables;
      - list of neighbour devices;
      - list of device identifiers;
      - data rates; and/or
      - indication of presence, and/or
   - for said application communication layer:
      - snmp parameters;
      - dns parameters; and/or
      - proprietary developed client parameters.

According to a preferred embodiment said home network analyser further comprises a discretiser that is connected to said collection module, said discretiser being configured to:
- receive said physical communication layer performance parameters and said other communication layer performance parameters;
- discretise said physical communication layer performance parameters and said other communication layer performance parameters into a plurality of respective, predetermined, discrete parameter ranges; and
- provide said discrete parameter ranges of said physical communication layer performance parameters and said other communication layer performance parameters to said collection module.

This enables digital processing of the parameters which improves the possibilities for automating tools for network performance analysis and troubleshooting.

Preferably said network analyser further comprises an analysis module that is connected to said collection module, said analysis module being configured to:
- receive from said collection module a plurality of parameters comprising:
- at least one of said physical communication layer performance parameters; and
- at least one of said other communication layer performance parameters;
- detect a network performance problem associated with said plurality of parameters.

Preferably said network performance problem is selectable from a set of predetermined network problems.

In this way an efficient and consistent identification of the root cause and solutions to a home network performance issue is made possible.

According to a preferred embodiment said analysis module comprises a belief network, said belief network comprising:
- at least one input node receiving said plurality of parameters,
- at least one evaluation node being configured to calculate at least one corresponding evaluation node statuses based on conditional probabilities between at least one of said physical communication layer performance parameters and at least one of said other communication layer performance parameters.

Preferably said analysis module is configured to select said network performance problem from said set of predetermined network performance problems based on conditional probabilities between a predetermined set of at least one evaluation node statuses and said predetermined set of predetermined network problems.

According to still a further embodiment said home network analyser further comprises a diagnostic module connected to said analysis module, said diagnostic module comprising at least one predetermined cause and/or at least one predetermined solution for the detected network performance problem.

This allows a reliable, adaptive and automated analysis of the parameter analysis.

According to an optional embodiment said diagnostic module is connectable to a display configured to displaying said cause or solution.

According to an alternative embodiment said solution comprises at least one predetermined home network device configuration parameter adaption, said diagnostic module being connectable to a home network device configured to receive said home network device configuration parameter adaption.

This will allow suitable network devices 2 to resolve network performance issues without any end user intervention.

According to still a further embodiment said diagnostic module is connectable to a database configured to aggregate historical information about said detected problems and/or said solutions.

This enables a self-learning and adaptive home network analysis system.

According to a second aspect of the invention there is provided a method for analysing a home network by means of a home network analyser according to the first aspect of the invention, comprising the steps of:
- said collection module receiving physical communication layer performance parameters indicative for the performance of a physical communication layer of said home network, and
- said collection module receiving at least one other performance parameter, indicative for the performance of at least one other communication layer.

According to a third aspect of the invention there is provided a computer program product adapted to perform the method according to the second aspect of the invention

According to a fourth aspect of the invention there is provided a computer readable storage device encoding a machine-executable computer program according to the third aspect of the invention.

### Brief Description of the Drawings

Fig. 1 schematically illustrates an embodiment of a home network connected to a network analyser according to the invention;
Fig. 2 schematically illustrates an embodiment of the network analyser comprising a belief network; and
Fig. 3 schematically illustrates an embodiment of a method of operation of a network analyser according to the invention.

### Detailed Description of Embodiment(s)

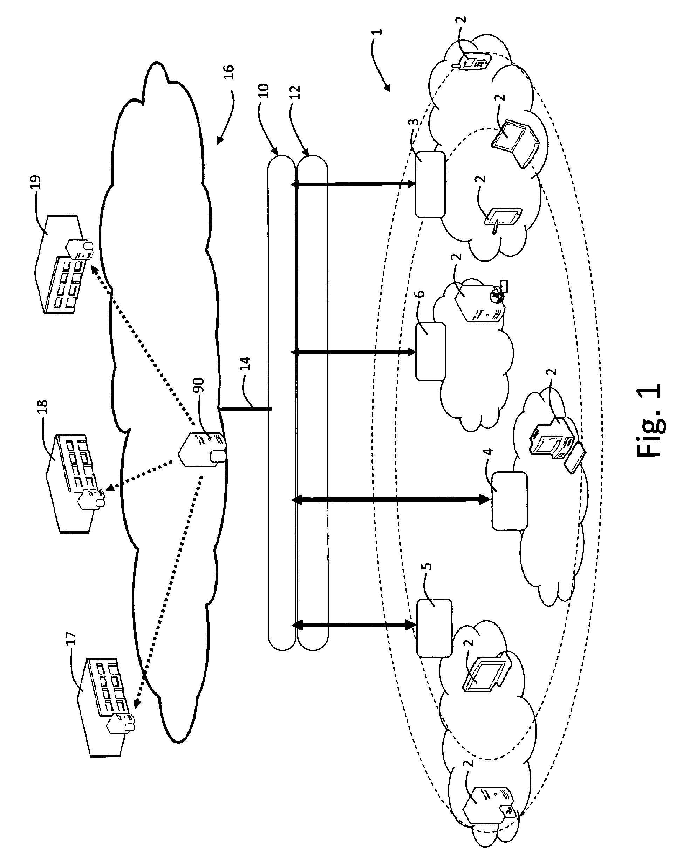

Figure 1 schematically shows a home network 1 that comprises a plurality of home network devices 2, such as for example a personal computer, a laptop, a tablet computer, a digital television set top box, a gaming console, etc. Some of these home network devices 2 are linked to the home network by means of wireless communication links 3, other devices 2 are linked by means of phone lines 4, while still others are linked by means of power lines 5 or coaxial cables 6. This home network 1 usually resides in the end customer premises and is connected by means of a suitable home gateway or residential gateway 12 to an access network 14 which is connected to the telecommunication network of the network operator or the internet 16. The home network analyser 10 for a home network 1 according to the embodiment of Figure 1 is implemented as an application programming interface available in this residential gateway 12. However the network analyser 10 could equally be implemented as a suitable software or hardware component of any other home network device 2 or any suitable combination. As shown the home network devices 2 in home network 1 are connected by means of a plurality of physical communication layers. Some home network devices 2 are connected to the home network 1 by means of a wireless network interface 3, but other devices are connected to the home network by means of a suitable network interface for phone lines 4, power lines 5, coax cables 6.

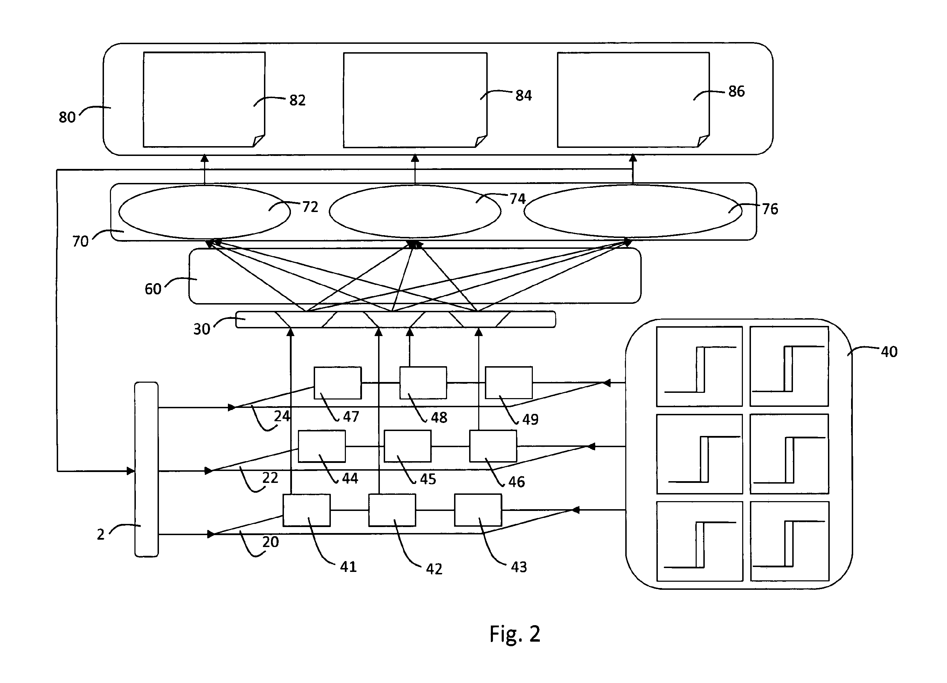

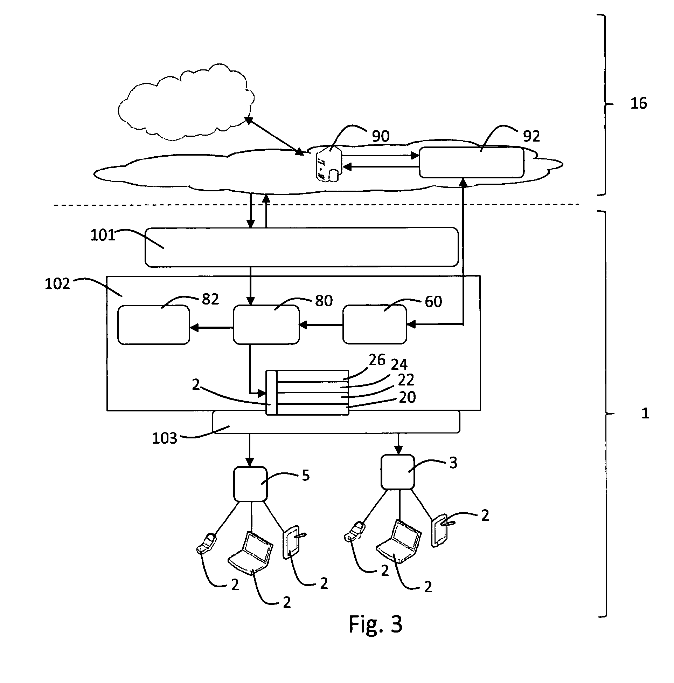

It is clear that the home network, as in Figures 2 and 3, comprises next to the physical communication layer, also comprises other communication layers. These communication layers are generally known to person skilled in the art and are commonly known as OSI layers. The home network analyser 10 comprises a collection module 30 that is configured to receive physical communication layer performance parameters 41, 42, 43. Examples of such physical communication layer performance parameters that are received by the collection module 30 could for example be the Channel frequency response 41 (CFR), the Signal-to-noise ratio 42 (SNR) or the Noise level 43. All these parameters could for example be provided as an average attenuation value or a frequency-dependent vector or in any other suitable form. According to alternative embodiments other parameters such as for example the Code rate, the Modulation type or any other suitable parameter that can provided an indication of the performance of the physical communication network layer 22 of the home network 1 could be provided. These parameters could be determined and provided to the collection engine 30 of the network analyser 10 by the home network devices 2 or other network equipment such as for example network interfaces or gateways forming part of the home network. Alternatively these parameters could be determined and provided by the home network gateway 12. According to still a further alternative some of these performance parameters might also be calculated from other performance parameters, for example the SNR performance parameter can be calculated in function of the received CFR and Noise performance parameters

As further shown in Figure 2, the collection module 30 of the network analyser 10 also receives other performance parameters, indicative for the performance of other communication layers of the home network 10. These other communication layers are for example be , as shown in the embodiment of Figure 2, a media access control communication layer 22 (MAC), a network communication layer 24 (NET), but could equally comprise any other communication layer such as for example an application communication layer 26 (APP). According to this embodiment network performance parameters for the media access control communication layer 22 (MAC) comprise a Cyclic Redundancy Check 44 (CRC), throughput 45 and Bit error rate 46 (BER), however according to alternative embodiments other parameters such as for example Scheduling, retransmission counters, a list of devices, etc. could be provided to the collection module 30 of the network analyser 10. As shown also for the network communication layer 24 (NET) of the home network parameters such as IP tables 47, a list of device identifiers 48 and network identifiers 49. According to alternative embodiments other parameters so as an indication of presence, data rates, a list of neighbour devices, etc. According to still further embodiments the collection engine 30 is also provided with parameters for the application communication layer 26 (APP), such as for example snmp parameters, dns parameters and/or any other suitable parameters such as for example proprietary developed client parameters.

As shown in the embodiment of Figure 1, in general, when the network analyser 10 receives the performance parameters of other communication layers 22, 24, 26, these can be correlated with performance parameters of the physical communication layer 20 in order to enable a more reliable troubleshooting of some of the physical communication layer problems, which for example in the case of a power link network are related to disturbers such as a dimmer, a switched mode power-supply, etc. The performance parameters received by the network analyser 10, as shown in Figure 1, can be provided to a database 90 that aggregates historical information about these performance parameters. This database 90 could for example be a software application implemented on a suitable computing system, such as for example a server, that resides in the network of the operator or the internet 16 and can communicate with the home gateway, when instructed by a network operator during a troubleshooting operation or alternatively in an automated way. This database 90 then, according to this embodiment, is available to one or more network operator management centres 17, 18, 19 and as such provides a network management solution that takes into consideration other communication layers 22, 24, 26 of the home network 1 in order to more reliable troubleshoot physical network communication layer 20 performance issues in the home network device 2 communication.

According to an embodiment the correlated with performance parameters can already be performed at the level of the collection engine 30 by adjusting at least one of the physical communication layer performance parameters in function of at least one of the other communication layer performance parameters. For example, the device ID 48 of the network layer 24 can be linked to systematic errors typical for this particular device during measurement of its physical layer performance parameters such as for example SNR 42, such as for example a typical offset value between the measured value and the actual value of the SNR 42. In that case the collection engine 30 can adjust the measured SNR 42 to take into account this offset value in function of the detected device ID 48 and thus allow a more reliable detection of physical layer performance issues.

According to the embodiment as shown in Figures 2 and 3, however collecting the performance parameters by the collection engine 30 is a first step 101 in a largely automated method of operation of the network analyser 10 that uses data mining techniques for optimising and troubleshooting the home network 1 physical network communication layer 20. As will be explained in more detail below, according to this preferred embodiment the network analyser makes use of a statistical belief network interference algorithm to infer the targeted physical layer issues. This is a type of algorithm that generally speaking mimics the structure of the brain and is able to adapt its own configuration in function of the home network performance parameters and predetermined rules to diagnose and troubleshoot the home network performance. In other words, such an intelligent algorithms can adjust itself and provide reliable solutions which improve the efficiency of the assistance of the service operator's technician. This is in particular home networks 1 of which at least a part comprises a power line physical communication network layer 20.

In order to improve robustness of such a home network analyser 10 and to allow for algorithms and rules for automation to be efficiently implemented the home network analyser further comprises a discretiser 40. This discretiser 40 is, as shown in Figure 2, is connected to the network device 2 to receive the network performance parameter and to the collection module 30 to provide it with the processed performance parameters. As shown the discretiser 40 in this way receives the physical communication layer performance parameters CFR 41, SNR 42, Noise 43 and the other communication layer performance parameters CRC 44, throughput 45, BER 46, IP tables 47, device ID 48, data rates 49. The dicretiser 40 will then discretise these parameters into a plurality of respective, predetermined, discrete parameter ranges. For example, the CFR values could be discretised in discrete ranges like 0-10dB, 10-20 dB, etc. It is possible to do the same for SNR. The BER can for example be discretised in discrete ranges like 10⁻⁹, 10⁻⁸, etc.. The device ID can be discretised in ranges like Vendor 1, Vendor 2, etc., the network ID can be discretised in ranges like SSID 1, SSID 2, etc. The CRC values can be discretised in discrete ranges like ACK, NACK, etc.. It is clear that other suitable discrete ranges could be considered. These discrete parameter ranges are then provided to the collection module 30 of the network analyser. As shown in the embodiment of Figure 2, the collection module 30 in this way receives a discretised parameter range for the CFR 41 and the SNR 42 of the physical network communication layer 20, the network ID 48 of the network communication layer 24 and the BER of the media access communication layer 26. It is clear that in the embodiment of Figure 2 already at the level of the collection module 30 there is made use of the network ID 49 of the network layer 24 to adjust the SNR parameter of the physical network layer 20 as explained above.

The network analyser 10 according to the embodiment of Figures 2 and 3 further comprises an analysis module 60 that receives from the collection module 30 these discretised parameters and in step 102 of the method of operation of the network analyser will automatically detect a network performance problem associated with these discretised parameters. As shown, the analysis module 60 does this by making a selection from a set of predetermined network problems 70. This set for example comprises network problems of the physical layer 20 of the home network 1 such as impulse noise 72, stationary noise 74, excessive channel selectivity 76, etc. In order to perform this analysis the analysis module 60 comprises a belief network, also known as a Bayesian network or a neural network. This said belief network comprises input nodes that receive the parameter ranges from the collection engine 30 as explained above. These input nodes are then connected to evaluation nodes that will calculate evaluation node statuses based on conditional probabilities between the physical communication layer performance parameters, such as CFR 41 and SNR 42 and the other communication layer performance parameters, such as network ID 48 and BER 46. The calculated evaluation node statuses are for example selected from a set of predetermined evaluation node statuses, such as Good, Medium and Bad. It is however clear that other statuses could be considered such as for example Low and High, or any other suitable set of statuses. This then enables in an efficient way the analysis module 60 to select a specific network performance problem based on conditional probabilities between a predetermined set of at least one evaluation node statuses and the predetermined set of predetermined network problems. According to the embodiment shown in Figure 2 this for example means that the analysis module 60 is able to automatically perform these evaluations:
- If the home network device 2 has provided a SNR parameter value of which the evaluation node indicates a good status, which we will refer to as a good SNR 42 for the sake of brevity and a good CFR 41, while the evaluation nodes indicate a bad BER 46 status, the conditional probabilities of the belief network will link this with the predetermined network problem of impulsive noise 72;
- If the home network device 2 has provided a bad SNR 42 and a good CFR 41, while the evaluation nodes indicate a good BER value the conditional probabilities of the belief network will link this with the predetermined network problem of stationary noise 74.
- If the home network device 2 has provided a low SNR 42 value and a bad CFR 41 condition, while the evaluation is performed with a low BER 46 the conditional probabilities of the belief network will link this with the predetermined network problem too high channel frequency attenuation 76. Now that the analysis module 60 has determined the network performance problem associated with the physical layer 20 of the home network 1, the diagnostic module 80 will link up the detected network performance problem with its cause such as for example identification of possible disturbers or possible solutions for the detected network performance problem. Possible disturbers 82 associated with impulse noise 72 might for example be a dimmer or neon lamps, possible disturbers 84 for stationary noise 74 a power supply or radio frequency interference and possible disturbers 86 for excessive channel selectivity 76 multiple plugs or lightening plugs in the power link network might be identified.

According to one embodiment these possible disturbers or solutions can be provided to a network operator or to the user of a home network by displaying them on a suitable display, such as for example the display of the home network device 2.

However alternatively in step 103 the solution provided by the diagnostic module 80 comprises a parameter of the home network device 2 that can be adapted and is able to connect to this home network device 2 to automatically adjust its configuration with the new parameter. Such parameters of a home network device 2 are for example, the channel encoder code rate, bandwidth notching at certain frequencies, power adaptation, etc..

The information about the detected network performance problem is stored, for example in suitable database 90 in an external centre of the network operator in order to allow for subsequent data analysis. The processed information about the detected network performance problems, causes and/or solutions could, as shown in Figure 3 even be provided to other service or network operators by means of supplementing the database 90 with an internet or cloud based storage system 92 so that the information becomes available to other home network analysers as over the top Operations Support System (OSS) application As shown in the embodiment of Figure 3 the historical information of this database 90 is then provided to the analysis module 60 in order to update the conditional probabilities of its belief network. In this way a self-learning analysis module 60 is able to adaptively improve the quality of its network analysis capabilities by adaptively improving the conditional probabilities between the physical communication layer performance parameters and the other communication layer performance parameters of its belief network.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A home network analyser (10) for a home network (1) comprising a plurality of communication layers (20, 22, 24, 26), said home network analyser (10) comprising a collection module (30) configured to receive physical communication layer performance parameters (41, 42, 43) indicative for the performance of a physical communication layer (20) of said home network (1),
**CHARACTERIZED IN THAT**,
said collection module (30) being further configured to receive at least one other performance parameter (44, 45, 46, 47, 48, 49), indicative for the performance of at least one other communication layer (22, 24, 26).

2. A home network analyser (10) according to claim 1, **characterised in that** said collection module (30) adjusts at least one of said physical communication layer performance parameters (41, 42, 43) in function of at least one of said other performance parameters (44, 45, 46, 47, 48, 49).

3. A home network analyser according to claim 1 or 2, **characterised in that** said at least one other communication layer (22, 24, 26), comprises one or more of the following:
- a media access control communication layer (22);
- a network communication layer (24); and/or
- an application communication layer (26).

4. A home network analyser according to claim 3, **characterised in that** said physical communication layer (20) performance parameter comprises one or more of the following:
- Channel frequency response (41), for example as an average attenuation value or a frequency-dependent vector;
- Signal-to-noise ratio (42), for example as an average attenuation value or a frequency-dependent vector;
- Noise level (43), for example as an average attenuation value or a frequency-dependent vector;
- Code rate; and/or
- Modulation type, and
said at least one other performance parameter comprises one or more of the following:
- for said media access control communication layer (22):
- Scheduling;
- Throughput (45);
- Bit error rate (46);
- Cyclic Redundancy Check (44);
- retransmission counters; and/or
- a list of devices,
- for said network communication layer (24):
- IP tables (47);
- list of neighbour devices;
- list of device identifiers (48);
- nework identifiers (49)
- data rates; and/or
- indication of presence, and/or
- for said application communication layer (26):
- snmp parameters;
- dns parameters; and/or
- proprietary developed client parameters.

5. A home network analyser according to any of the preceding claims, **characterised in that** said home network analyser further comprises a discretiser (40) that is connected to said collection module (30), said discretiser (40) being configured to:
- receive said physical communication layer performance parameters (41, 42, 43) and said other communication layer performance parameters (44, 45, 46, 47, 48, 49);
- discretise said physical communication layer performance parameters (41, 42, 43) and said other communication layer performance parameters (44, 45, 46, 47, 48, 49) into a plurality of respective, predetermined, discrete parameter ranges; and
- provide said discrete parameter ranges of said physical communication layer performance parameters (41, 42, 43) and said other communication layer performance parameters (44, 45, 46, 47, 48, 49) to said collection module (30).

6. A home network analyser according to claim 5, **characterised in that** said network analyser (10) further comprises an analysis module (60) that is connected to said collection module (30), said analysis module (60) being configured to:
- receive from said collection module (30) a plurality of parameters comprising:
- at least one of said physical communication layer performance parameters (41, 42, 43); and
- at least one of said other communication layer performance parameters (44, 45, 46, 47, 48, 49);
- detect a network performance problem associated with said plurality of parameters.

7. A home network analyser according to claim 6, **characterised in that** said network performance problem is selectable from a set of predetermined network problems (72, 74, 76).

8. A home network analyser according to claim 6 or 7, **characterised in that** said analysis module (60) comprises a belief network, said belief network comprising:
- at least one input node receiving said plurality of parameters,
- at least one evaluation node being configured to calculate at least one corresponding evaluation node statuses based on conditional probabilities between at least one of said physical communication layer performance parameters (41, 42, 43) and at least one of said other communication layer performance parameters (44, 45, 46, 47, 48, 49).

9. A home network analyser according to claim 8, **characterised in that** said analysis module (60) is configured to select said network performance problem from said set of predetermined network performance problems based on conditional probabilities between a predetermined set of at least one evaluation node statuses and said predetermined set of predetermined network problems.

10. A home network analyser according to any of the claims 6 to 9, **characterised in that** it said home network analyser (10) further comprises a diagnostic module (80) connected to said analysis module (60), said diagnostic module (80) comprising at least one predetermined cause and/or at least one predetermined solution for the detected network performance problem.

11. A home network analyser according to claim 10, **characterised in that** said diagnostic module (80) is connectable to a display configured to displaying said cause or solution.

12. A home network analyser according to claim 10, **characterised in that** said solution comprises at least one predetermined home network device configuration parameter adaption, said diagnostic module (80) being connectable to a home network device (2) configured to receive said home network device configuration parameter adaption.

13. A home network analyser according to any of the claims 10 to 12, **characterised in that** said diagnostic module (80) is connectable to a database (90) configured to aggregate historical information about said detected problems and/or said solutions, and **in that** said analysis module (60) is connectable to said database (90) in order to update said conditional probabilities between at least one of said physical communication layer performance parameters (41, 42, 43) and at least one of said other communication layer performance parameters (44, 45, 46, 47, 48, 49) of said belief network.

14. A method for analysing a home network (1) by means of a home network analyser (10) according to any of the preceding claims, comprising the steps of:
- said collection module (30) receiving physical communication layer performance parameters (41, 42, 43) indicative for the performance of a physical communication layer (20) of said home network (1), and
-- said collection module (30) receiving at least one other performance parameter (44, 45, 46, 47, 48, 49), indicative for the performance of at least one other communication layer (22, 24, 26).

15. A computer program product adapted to perform the method according to any of the claims 14.
